# EUROPÄISCHE PATENTANMELDUNG

(11) **EP 1 876 360 A2**
(43) Veröffentlichungstag der Anmeldung: **09.01.2008**
(21) Anmeldenummer: 07013084.4
(22) Anmeldetag: 04.07.2007
(51) Int. Cl.: F16B 12/10, F16B 12/12

(54) **Beschlagsystem zum Verbinden von Möbelteilen**

(30) Priorität: 05.07.2006 DE 102006031423
(71) Anmelder: Pötter Immobilien GmbH & Co. KG, 33342 Herzebrock-Clarholz (DE)
(72) Erfinder: Die Erfindernennung liegt noch nicht vor
(74) Vertreter: Neisen, Jürgen

(57) **Zusammenfassung**

Die Erfindung betrifft ein Beschlagsystem zum lösbaren und kraftschlüssigen Verbinden von plattenförmigen Möbelteilen, welches Beschlagsteile umfasst, die jeweils gegenüberliegend zugeordnet eine Verbindung der Möbelteile herstellen, wobei die Beschlagteile in mindestens einem der zu verbindenden Möbelteile in einer Nut versenkt angeordnet sind und die Verbindung der Möbelteile durch eine Auf- bzw. Einschiebbewegung herbeigeführt wird, bei der das eine Beschlagteil in Eingriff mit dem anderen Beschlagteil gelangt, und wobei beide Beschlagteile in der Endposition miteinander verrasten und die kraftschlüssige Verbindung der Möbelteile herstellen.

Das erfindungsgemäße Beschlagsystem sieht vor, dass zwei die Verbindung herstellenden Beschlagteile 3 und 4 als Formkörper mit einer unterschiedlichen Aufbauform ausgebildet sind, dass die Beschlagsteile 3 und 4 jeweils wechselseitig und miteinander korrespondierend an den zu verbindenden Möbelteilen 1 und 2 befestigbar sind,dass das eine Beschlagsteil 3 ein Anschlag- und Arretierungsteil 8 und ein Rastelement 9 aufweist, dass an dem anderen Beschlagsteil 4 ein Verrastungsteil 15 angeformt ist, und das die Beschlagsteile 3 und 4 in eine kraftschlüssige und lösbare Verbindung sowie arretierende Endposition bewegbar ausgebildet sind.

## Beschreibung

Die Erfindung betrifft ein Beschlagsystem zum lösbaren und kraftschlüssigen Verbinden von plattenförmigen Möbelteilen, welches Beschlagsteile umfasst, die jeweils gegenüberliegend zugeordnet eine Verbindung der Möbelteile herstellen, wobei die Beschlagsteile in mindestens einem der zu verbindenden Möbelteile in einer Nut versenkt angeordnet sind und die Verbindung der Möbelteile durch eine Auf- bzw. Einschiebbewegung herbeigeführt wird, bei der das eine Beschlagsteil in Eingriff mit dem anderen Beschlagsteil gelangt, wodurch die Verbindung der Möbelteile hergestellt wird.

Beschlagsysteme zum Verbinden von plattenförmigen Möbelteilen sind für die unterschiedlichsten Einsatzgebiete bekannt. Sie kommen zum Einsatz z. Bsp. bei der Verbindung von Fachböden mit den senkrechten Wangen von Regalen oder Schränken. Weiterhin werden sie bei der Korpusbildung verwendet, um die unterschiedlichen Korpusteile miteinander zu einem Schrank- bzw. Korpuselement zu verbinden.
Außerdem können diese Verbindungsbeschläge auch dazu geeignet sein, flache Möbelplatten in der gleichen Ebene miteinander zu verbinden.

Neben dieser vielseitigen Verwendbarkeit wird an moderne Beschlagsysteme zusätzlich die Forderung gestellt, dass dessen Bauelemente nach dem Verbindunden der Möbelteile möglichst unsichtbar bleiben.

Aus der älteren DE-A1-31 24 772 ist bereits ein Verbindungssystem für plattenförmige Möbelteile in der vorstehend beschriebenen Art bekannt, bei dem ein Beschlagsteil in einer Nut in der Stirnfläche eines der zu verbindenden Möbelplatten versenkt eingelassen und befestigt ist. Ein Distanzschraubelement bildet dabei das andere Beschlags- bzw. Verbindungsteil und ist an der Oberfläche des anderen Möbelteils befesteigt.

Die Verbindung der Beschlagsteile erfolgt dadurch, dass der Distanzschraubenkopf in eine Durchstecköffnung des versenkt eingelassenen Beschlagsteils eingesetzt wird und durch eine Schiebbewegung in eine als Langloch ausgebildete Führungshalterung gleitet und sich dort über eine Anlaufschräge dort arretierend verkeilt.

Derartige Verbindungen wurden früher sehr häufig eingesetzt. Der Nachteil bei dieser Verbindungstechnik besteht jedoch darin, dass keine dauerhafte und sichere Verbindung der Möbelteile gewährleistet war. Die als Verbindungselement dienende Distanzschraube konnte leicht aus der Möbelplatte herausbrechen, da an dieser Schraube relativ große Kräfte angreifen konnten. Weiterhin war hier ein hoher Grad an Fertigungsgenauigkeit notwendig, da die Verbindungselemente sehr genau in den vorgesehenen Positionen in den Möbelteilen angebracht sein mussten. Es war also eine sehr hohe Toleranzgenauigkeit notwendig.
Ferner war dieses System auch für den Endkunden nicht montagefreundlich ausgebildet.

Am Markt werden z.Zt. Beschlagsysteme angeboten, die ebenfalls im montierten Endzustand eine Verbindung der Möbelteile ermöglichen, bei der die Verbindungsbeschläge nach dem Verbindungsvorgang nicht mehr sichtbar sind.
Das Beschlagsystem umfasst dabei eine Profilschiene und Tragelemente. Die Profilschiene wird in einer Nut in der Stirnfläche des einen Möbelteils versenkt befestigt. Die Tragelemente werden auf der Oberseiten des anderen Möbelteils befestigt. Beim Verbindungsvorgang werden die Profilschinen in Eingriff mit den Tragelementen gebracht und das Möbelteil mit den eingesetzten Profilschinen wird bis zu einem in der Profilschiene angeordneten Anschlag in die Endposition geschoben.

Nachteilig bei dieser Ausbildungsform ist es, dass diese Lösung relativ teuer ist. Für unterschiedliche Tiefen der Möbelteile müssen Profilschienen mit jeweils unterschiedlichen Längen hergestellt und bereit gehalten werden.
Weiterhin können bei dieser Lösung Verarbeitungstoleranzen nicht ausgeglichen werden.
Bei der Montage bereitet das Aufschieben der Möbelteile auf die Tragelemente gewisse Schwierigkeiten, da ein langer und schwerer Aufschubweg zu überwinden ist.

Der Erfindung stellt sich somit das Problem, die vorstehend beschriebenen Nachteile der bekannten Lösungen zu vermeiden und ein Beschlagsystem zur Verbindung von plattenförmigen Möbelteilen für mehrere Verwendungsformen zu schaffen, welches preiswert und einfach herstellbar ist, einen ausreichenden Toleranzspielraum und eine montagefreundliche Anwendung ermöglicht.

Erfindungsgemäß wird dieses Problem durch ein Beschlagsystem mit den Merkmalen des Patentanspruchs 1 gelöst.
Vorteilhafte Ausgestaltungen und Weiterbildungen der Erfindung ergeben sich aus den nachfolgenden Unteransprüchen.

Mit der Erfindung werden eine ganze Reihe von Vorteilen erzielt.

Das Beschlagsystem ist für die verschiedensten Einsatzgebiete geeignet. Es können Böden zwischen Seiten und Wangen aufgeschoben und arretiert werden.
Es können damit Mittelwände in Schrankwänden eingeschoben werden. Es ist ein unsichtbares Aufsetzen und Arretieren von Wangen, Regalseiten auf Podesten und Sockeplatten sowie von Abdeckungen auf Regalwangen möglich.

Ferner können damit Konsolen vor Paneelen aufgehängt werden. Auch ist die Arretierung von übereinander gesetzten Wangen realisierbar.

Ein besonderer Vorteil besteht auch darin, dass das Beschlagsystem einsetzbar ist unabhängig von unterschiedlichen Bodentiefen.

Das Beschlagsystem gestattet in einfacher Weise eine unsichtbare Verbindung zweier Möbelteile durch eine leichte und werkzeuglose Montage bzw. Demontage.
So können z. Bs. Böden bis ca. 10. - 15 mm vor dem Endanschlag leicht aufgeschoben werden, bevor dann erst der Anzug in die Arretierung und den Endanschlag erfolgt.

Durch die erfindungsgemäße Feder- und Rastverbindung ist ein hoher Toleranzausgleich gewährleistet.

Das Beschlagsystem kann aus unterschiedlichen Materialien z. Bsp. aus Kunststoff oder Metall hergestellt werden. Besonders vorteilhaft dürfte die Ausbildung der beiden Teile als Kunststoftspritzteil sein, was eine preiswerte Massenfertigung ermöglicht. Zur Befestigung der Teile an den Möbelteilen sind ebenfalls nur standardmäßige Schraubelemente notwendig.

Da die Bohrungen für die Befestigungsschrauben in den Beschlagsteilen so platziert sind, dass sie sich im miteinander verrasteten Zustand axial gegenüberstehen, liegen auch die entsprechenden Befestigungspunkte an den Möbelteilen genau gegenüber. Somit erhält man für die Befestigungspunkte an den zu verbindenden Möbelteilen immer das gleiche Abstandsmaß. Dies erleichtert die Herstellung und fördert die Passgenauigkeit sowie die Befestigungsstabilität.

Insgesamt zeichnet sich das System durch die einfache Herstellbarkeit, die flexible und montagefreundliche Verwendbarkeit sowie durch die Möglichkeit aus, nur wenige und standardisierte Teile vorhalten zu müssen.

Ein Ausführungsbeispiel der Erfindung ist in den Zeichnungen rein schematisch dargestellt und wird nachfolgend näher beschrieben. Es zeigt:
- Figur 1: zwei zu verbindende Möbelteile mit den erfindungsgemäß ausgebildeten Beschlagteilen im nicht zusammengebauten Zustand in einer schematischen Draufsicht,
- Figur 2: die in Figur 1 dargestellten Möbelteile im zusammengebauten Zustand in einer schematischen Schnittdarstellung in Vorderansicht,
- Figur 3: die Einzelteile des Beschlagsystems bevor sie miteinander Verrasten, in einer schematischen Seitenansicht,
- Figur 4 und Figur 5: die beiden Einzelteile des Beschlagsystems im Detail, in perspektivischer Ansicht.

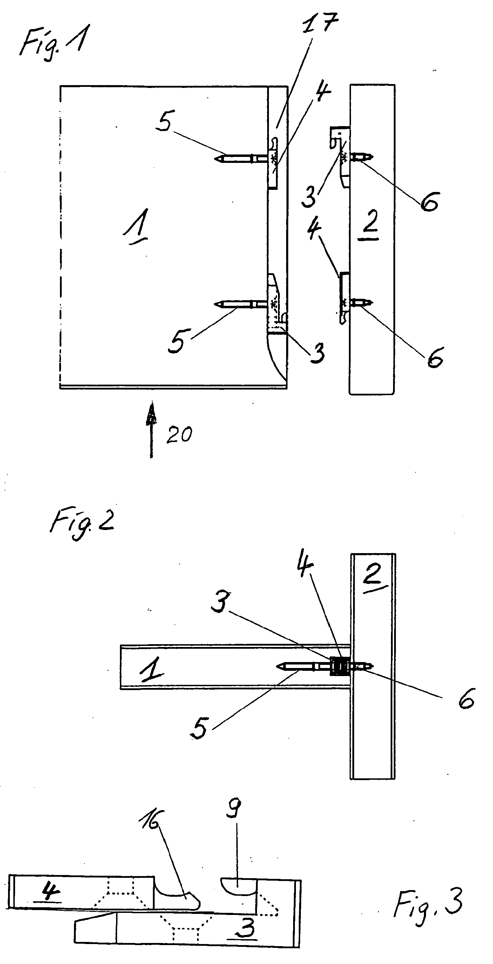

In den Figuren 1 und 2 sind die zu verbindenden Möbelteile mit 1 und 2 bezeichnet. Die Figur 1 zeigt dabei die Möbelteile 1 und 2 nebeneinander im nichtmontierten Zustand sowie mit den an den Möbelteilen befestigten Beschlagsteilen 3 und 4 die zur Verbindung der beiden Möbelteile vorgesehen sind. Der dargestellte Pfeil 18 symbolisiert, dass das Möbelteil 1 das bewegliche Teil ist, welches durch eine Schiebbewegung mit dem stationären Möbelteil 2 verbindbar ist.

In der Figur 2 ist der montierte Zustand nach dem Verbinden der beiden Teile dargestellt.

Das Möbelteil 1 könnte in diesem Ausführungsbeispiel ein Fachboden, das Möbelteil 2 könnte die senkrechte Wange eines Regalelementes bzw. Schrankelementes sein.

Die an den Möbelteilen 1 und 2 jeweils befestigten Beschlagsteile 3 und 4 bilden die Verbindungselemente des Beschlagsystems, die form- und kraftschlüssig miteinander in Eingriff gebracht werden (Fig. 2).

Wie aus der Figur 1 hervorgeht sind die Beschlagsteile 3 und 4 am Möbelteil 1 in einer Nut 17 verdeckt angebracht und durch die Befestigungsschrauben 5 befestigt.
Die korrespondierenden Beschlagsteile 3 und 4 für das Möbelteil 2 sind auf dessen Oberfläche ebenfalls über Befestigungsschrauben 6 befestigt.

Die Figur 3 verdeutlicht die Funktion und das Zusammenwirken der Beschlagsteile 3 und 4.

Die Beschlagsteile 3 und 4 sind in dieser Zeichnung als Einzelteile dargestellt, und zwar in einer Position, die sie während des Verbindungsvorgangs einnehmen bevor die Rastelemente 9 und 16 miteinander in Eingriff gelangen.

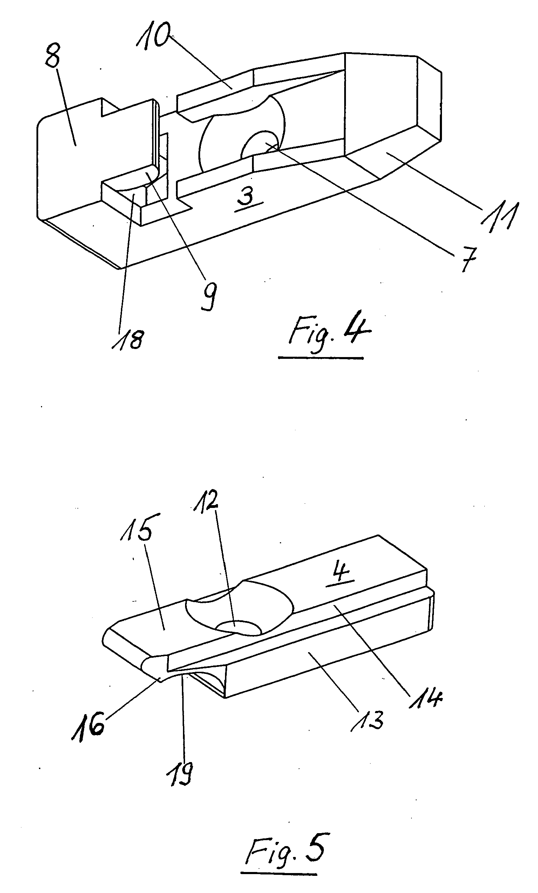

Die Beschlagsteile 3 und 4 sind in Figuren 4 und 5 im Detail näher dargestellt. Wie aus den Zeichnungen ersichtlich, sind die Beschlagsteile 3 und 4 als Formteile ausgebildet und weisen eine unterschiedliche Aufbauform auf.

Das Beschlagsteil 3 ist als Formkörper ausgebildet und besitzt eine mit einer Versenkung versehene Befestigungsbohrung 7 für die Aufnahme einer Befestigungsschraube 5, 6.

An dem einen Ende des Beschlagsteils 3 ist ein Anschlag- und Arretierungsteil 8 gebildet.
An diesem Anschlag- und Arretierungsteil 8 ist ein Rastelement 9 nach Art einer Rastklinke angeformt. Das senkrecht abstehende Wandteil 18 bildet den Endanschlag für das in diesem Bereich eingreifende Verrastungsteil 15 des Beschlagsteils 4.
Im mittleren Bereich des Beschlagsteils 3 sind seitlich hochstehende Führungsstege 10 ausgeformt, so dass sich hier ein Führungskanal zur Aufnahme eines korrespondierenden Formteiles des Beschlagteils 4 ergibt.
An der anderen Seite des Beschlagsteils 3 ist eine konisch zulaufende Anlaufspitze 11 gebildet.

Das Beschlagsteil 4 ist in der Figur 5 mit Blick auf seine Oberseite dargestellt. Mit der in der Fig. 5 nicht sichtbaren Unterseite des Grundkörperteils 13 liegt es im montierten Zustand auf der Oberfläche des zu verbindenden Möbelteils 2, bzw. auf dem Boden der Nut 17 des Möbelteils 1 auf. Das Beschlagsteil 4 ist ebenfalls als Formkörper ausgebildet und besitzt eine mit einer Versenkung versehene Befestigungsbohrung 12 zur Aufnahme einer Befestigungsschraube 5, 6.

Auf seiner oberen, nach außen gerichteten Seite ist eine Art Schienenteil 14 gebildet, welches eine geringere Breite als das Grundkörperteil 13 aufweist.
Auf einer Seite ist das Beschlagsteil 4 mit einem Verrastungsteil 15 ausgebildet, an dem eine Rastnase 16 angeformt ist, die über den in der Zeichnung ersichtlichen Bogen 19 mit dem Grundkörperteil verbunden ist.

Die Funktion und das Zusammenwirken der beiden Beschlagsteile 3 und 4 ist wie folgt:

Wie in der Figur 1 gezeigt, sind bei den zu verbindenden Möbelteilen 1 und 2 die Beschlagsteile 3 und 4 jeweils wechselseitig korrespondierend angeordnet.
Die Anordnung der beiden Beschlagsteile 3 und 4 ist dabei so getroffen, dass an dem beweglichen Möbelteil 1 das Beschlagsteil 4 im hinteren und das Beschlagsteil 3 mit dem Anschlag- und Arretierungsteil 8 im vorderen Bereich befestigt ist.
An dem stationären Möbelteil 2 sind die Beschlagsteile 3 und 4 dagegen entgegengesetzt angeordnet. Das Beschlagsteil 3 mit dem Anschlag- und Arretierungsteil 8 ist im hinteren, das Beschlagsteil 4 im vorderen Bereich befestigt.

Die Möbelteile 1 und 2 können durch zwei verschieden Handhabungen miteinander verbunden werden.

Beim Verbinden der beiden Möbelteile 1 und 2 kann das Möbelteil 1 zunächst versetzt an das Möbelteil 2 angesetzt werden, so dass die Beschlagsteile 3 und 4 in die Nut 17 eintauchen und jeweils voreinander stehen. Durch die nachfolgende Schiebbewegung gelangen dann die korrespondierenden Beschlagsteile 3 und 4 in Eingriff miteinander bis die Arretierungs- und Endposition erreicht wird.

Das Schienenteil 14 des Beschlagsteils 4 läuft zunächst in den durch die Führungsstege 10 gebildeten Kanal des Beschlagsteils 3 ein. Bei der Weiterbewegung verklinkt sich dann in der Endposition die Rastnase 16 des Beschlagsteils 4 mit dem Rastelement 9 des Beschlagsteils 3.

In einer weiteren vorteilhaften Handhabung kann das Möbelteil 1 aber auch von vorne angesetzt werden und über die gesamte Tiefe bzw. Breite des Möbelteils 2 aufgeschoben werden.

Das Beschlagsteil 4 ist mit seiner Bauhöhe derart angepasst, dass diese Beschlagsteile sich bei der Aufschiebbewegung nicht berühren können, sie können ungestört überfahren werden. Vorteilhafterweise erhält man dadurch zunächst eine kontrollierte und fast über den gesamten Aufschiebeweg vorhandene Führung. Das auf der Oberfläche aufstehende Beschlagsteil 4 des Möbelteils 2 taucht hierbei zunächst in die Nut 17 des Möbelteils 1 ein und das in der Nut 17 angebrachte Beschlagsteil 4 gleitet über das am stationären Möbelteil 2 angebrachte Beschlagsteil 4 hinweg. Erst kurz vor der Endposition erfolgt dann die mit etwas mehr Kraftaufwand herstellbare Verrastung und Arretierung der beiden Beschlagsteile miteinander, und zwar sowohl vorne als auch im hinteren Bereich.

Zum Lösen dieser Verbindung muss dann eine entsprechende Kraft in entgegengesetzter Richtung aufgewendet werden, um die vorstehend beschriebene Rastverbindung bei Bedarf zu lösen.

Die Anwendung des Beschlagsystems ist nicht auf das vorstehend näher beschriebene Ausführungsbeispiel mit der Fachbodenlösung beschränkt.

Mit den erfindungsgemäßen Beschlagsteilen lassen sich auch Decken- oder Bodenteile mit senkrechten Seiten- und Mittelwänden verbinden.

Weiterhin können auch Möbelplatten an ihren Stirnflächen miteinander verbunden werden. Hierbei ist es allerdings vorteilhaft, dass in den Stirnflächen beider Teile jeweils eine Nut zur Aufnahme der Beschlagsteile 3 und 4 vorgesehen wird. Die Tiefe der beiden Nuten sollte dabei in etwa jeweils der halben Bauhöhe der Beschlagsteile im verrasteten Zustand entsprechen.
Die Nutentiefe sollte zumindest so gewählt werden, dass die einzelnen Beschlagsteile einen sicheren Sitz in der Nut finden und dass beim Zusammenschieben und Verrasten der Beschlagsteile diese in den Nuten vollständig aufgenommen werden, so dass die Stirnflächen der Möbelteile direkt aneinanderstossen und eine nahezu nahtlose Oberfläche der Möbelteile gebildet wird.

Die Bohrungen 7 und 12 für die Befestigungsschrauben 5 und 6 sind in den Beschlagsteilen 3 und 4 so platziert, dass sie sich im miteinander verrasteten Zustand axial gegenüberstehen. Damit liegen auch die entsprechenden Befestigungspunkte an den Möbelteilen genau gegenüber. Somit erhält man für die Befestigungspunkte an den zu verbindenden Möbelteilen 1 und 2 immer das gleiche Abstandsmaß. Dies erleichtert die Herstellung und fördert die Passgenauigkeit sowie die Befestigungsstabilität.

### Bezugszeichenliste:

- 1.: Möbelteil
- 2.: Möbelteil
- 3.: Beschlagsteil mit Anschlag- und Arretierungsteil
- 4.: Beschlagsteil mit Verrastungsteil
- 5.: Befestigungsschraube für Nutbefestigung
- 6.: Befestigungsschraube für Oberflächenbefestigung
- 7.: Bohrung für Befestigungsschraube im Beschlagsteil 3
- 8.: Anschlag- und Arretierungsteil am Beschlagsteil 3
- 9.: Rastelement
- 10.: Führungsstege
- 11.: Anlaufspitze
- 12.: Bohrung für Befestigung im Beschlagsteil 4
- 13.: Grundkörperteil
- 14.: Schienenteil
- 15.: Verrastungsteil am Beschlagsteil 4
- 16.: Rastnase
- 17.: Nut
- 18.: Wandteil, Endanschlag
- 19.: Bogen
- 20.: Pfeil

## Patentansprüche

1. Beschlagsystem zum lösbaren und kraftschlüssigen Verbinden von plattenförmigen Möbelteilen,
welches Beschlagsteile umfasst, die jeweils gegenüberliegend zugeordnet eine Verbindung der Möbelteile herstellen,
wobei die Beschlagsteile in mindestens einem der zu verbindenden Möbelteile in einer Nut versenkt angeordnet sind
und die Verbindung der Möbelteile durch eine Auf- bzw. Einschiebbewegung herbeigeführt wird, bei der das eine Beschlagsteil in Eingriff mit dem anderen Beschlagteil gelangt,
wodurch die Verbindung der Möbelteile hergestellt wird,
**dadurch gekennzeichnet,**
**dass** zwei die Verbindung herstellenden Beschlagsteile 3 und 4 als Formkörper mit einer unterschiedlichen Aufbauform ausgebildet sind,
**dass** an dem einen Beschlagsteil 3 ein Anschlag- und Arretierungsteil 8 und ein Rastelement 9 angeordnet sind,
**dass** an dem anderen Beschlagsteil 4 ein Verrastungsteil 15 angeformt ist,
und **dass** die an den zu verbindenden Möbelteilen 1 und 2 befestigbaren Beschlagsteile 3
und 4 in eine kraftschlüssige und lösbare Verbindung sowie in eine arretierende Endposition bewegbar ausgebildet sind.

2. Beschlagsystem nach Anspruch 1,
**dadurch gekennzeichnet**
**dass** die Beschlagsteile 3 und 4 jeweils an einem der zu verbindenden Möbelteile 1 oder 2 oder wechselseitig und miteinander korrespondierend an den Möbelteilen 1 und 2 befestigbar sind.

3. Beschlagsystem nach Anspruch 1 und 2,
**dadurch gekennzeichnet,**
**dass** die Anordnung der beiden Beschlagsteile 3 und 4 so getroffen ist,
**dass** an dem beweglichen Möbelteil 1 das Beschlagsteil 4 im hinteren und das Beschlagsteil 3 mit dem Anschlagteil 8 und dem Verrastungelememt 9 im vorderen Bereich befestigt ist.
und **dass** an dem stationären Möbelteil 2 sind die Beschlagsteile 3 und 4 entgegengesetzt hierzu angeordnet sind,
wobei das Beschlagsteil 3 mit dem Anschlag- und Verrastungselement im hinteren, das Beschlagsteil 4 im vorderen Bereich befestigt ist.

4. Beschlagsystem nach einem der Ansprüch 1 bis 3,
**dadurch gekennzeichnet,**
**dass** an dem Beschlagsteil 3 Führungsstege 10 angeformt sind,
die einen Führungskanal zur Aufnahme eines an dem Beschlagsteil 4 angeformten Schienenteils 14 bilden,
so dass beim Ineinanderschieben der beiden Teile das Schienenteil 14 des Beschlagsteils 4 zwischen den Führungsstegen 10 des Beschlagsteils 3 geführt aufgenommen wird.

5. Beschlagsystem nach einem der Ansprüch 1 bis 4,
**dadurch gekennzeichnet,**
**dass** die Bauhöhe des Beschlagsteils 4 derart angepasst ist, das beim Aufschieben des einen Möbelteils 1 die Beschlagsteile 4 nicht miteinander in Berührung kommen und überfahrbar sind.

6. Beschlagsystem nach einem der Ansprüche 1 bis 5,
**dadurch gekennzeichnet,**
**dass** die Bohrungen 7 und 12 für die Befestigungsschrauben 5 und 6 in den Beschlagsteilen 3 und 4 so platziert sind, dass sie sich im verrasteten Zustand der beiden Beschlagsteile axial gegenüberstehen.

7. Beschlagsystem nach einem der Ansprüch 1, 2, 4 und 6,
**dadurch gekennzeichnet,**
**dass** zum Verbinden von Möbelteilen an ihren Stirnflächen, jeweils in jeder Stirnfläche eine Nut zur Aufnahme der Beschlagsteile 3 und 4 angeordnet ist,
**dass** die Tiefe der beiden Nuten dabei so gewählt wird, dass die einzelnen Beschlagsteile 3 und 4 einen sicheren Sitz in der Nut finden
und **dass** nach dem Zusammenschieben und Verrasten der Beschlagsteile miteinander, die Oberflächen der Möbelteile nahezu nahtlos aneinanderstossen.
